# EUROPEAN PATENT APPLICATION

(11) **EP 1 887 111 A1**
(43) Date of publication of application: **13.02.2008**
(21) Application number: 06747021.1
(22) Date of filing: 30.05.2006
(51) Int. Cl.: D01F 6/92, C08K 5/20, C08L 67/00, D01F 6/62

(54) **POLYESTER HIGH-STRENGTH FIBER**

(30) Priority: 31.05.2005 JP 2005160432
(71) Applicant: Teijin Techno Products Limited, Osaka-shi, Osaka 541-0054 (JP); TOYOBO CO., LTD., Osaka-shi Osaka 530-8230 (JP)
(72) Inventor: YAMAZAKI, Hitoshi, 1008440 (JP); KIKUTANI, Takeshi, c/o Tokyo Inst. of Technology, Tokyo 1528552 (JP)
(74) Representative: Weber, Thomas
(86) International application number: PCT/JP2006/310793
(87) International publication number: WO 2006/129667

(57) **Abstract**

An object of the present invention is to provide a high-strength polyester fiber suitable for industrial materials, in particular, for a tire cord.

The high-strength polyester fiber of the present invention is a polyester high-strength fiber comprising a polyester resin and a polycarboxylic acid-based amide compound, wherein the polyester fiber has a strength of 8.8 cN/dtex or more.

## Description

### TECHNICAL FIELD

The present invention relates to a high-strength polyester fiber suitable for industrial materials.

### BACKGROUND ART

Polyester is widely used in fibers, shaped articles and the like and occupies an important place in industry because it is relatively inexpensive. The use of a polyester fiber as a reinforcement of rubber such as tire cord has been widely practiced, and recently there has been a demand for a lightweight tire (reduction in the amount of tire cord used) with enhanced driveability and workability by increasing the strength of the polyester fiber which is a general-purpose fiber.

Conventionally, increased strength of a polyester fiber may be attained by increasing the polymerization degree of the polyester fiber (see, for example, Non-Patent Document 1). However, an increase in the polymerization degree naturally leads to an increase in melt viscosity and gives rise to bad spinnability and reduced productivity. To decrease the melt viscosity, a method of elevating the melting point may be used, but in that case the polymerization degree decreases due to accelerated decomposition of the polymer and the purpose of increasing the strength cannot be achieved.

In order to solve this problem, in the past various lubricants or viscosity-decreasing agents have been added. Specific examples of the former include an ethylene-bis-stearic acid amide, a stearic acid and a stearyl alcohol. The addition of such a lubricant is effective in decreasing melt viscosity, but is known to bring about reduction in molecular weight. As for the latter, there have been proposed various viscosity-decreasing agents having a function of decreasing the melt viscosity of a polyester resin and at the same time, causing substantially no decrease in the polymerization degree of the resin (see, for example, Patent Documents 1 to 7). However, addition in a large amount (several % or more) is required so as to fully bring out the effect of such a viscosity-decreasing agent and obtain a high-strength fiber. Not only is this disadvantageous in view of profitability, but also a problem may arise in the process, for example, contamination in the extruder may be accelerated or partial aggregation or dispersion failure of the viscosity-decreasing agent may occur, and stable production with industrially stable quality may be very difficult. With regard to the strength of the high-strength polyester fiber obtained by melt spinning after the addition of the viscosity-decreasing agent, when fibers having a given molecular weight (intrinsic viscosity) are compared, the effect of the molecular weight has not yet been satisfactorily exerted, and there remains a problem that a polymer having a higher molecular weight must be used for increasing the strength.

Patent Document 1: Kokai (Japanese Unexamined Patent Publication) No. 8-157642
Patent Document 2: Kokai No. 2-189348
Patent Document 3: Kokai No. 3-223382
Patent Document 4: Kokai No. 3-223383
Patent Document 5: Kokai No. 5-247436
Patent Document 6: Kokai No. 5-255533
Patent Document 7: Kokai No. 5-262962
Non-Patent Document 1: A. Ziabicki, Textile. Res. J., 66(11), 705 (1996)

### DISCLOSURE OF THE INVENTION

### Problems to be Solved by the Invention

An object of the present invention is to provide an additive having a performance of, at the melt spinning of a polyester resin, decreasing the melt viscosity without impairing the polymerization degree of the polyester resin by the addition in a smaller amount than before, and enabling to obtain a homogeneous undrawn yarn with excellent drawing property; and provide a high-strength polyester fiber having a sufficiently high strength in usage for materials, particularly, for a tire cord, by adding the additive to a polyester resin.

### Means for Solving the Problems

As a result of various studies for attaining the object above, the present inventors have accomplished the present invention.

In other words, the present invention is as follows.
1. A polyester high-strength fiber comprising a polyester resin and a polycarboxylic acid-based amide compound, wherein the polyester fiber has a strength of 8.8 cN/dtex or more.

2. The polyester high-strength fiber as described in 1 above, wherein the amide compound is a polycarboxylic acid-based amide compound represented by the following formula (1):

R¹-(CONH-R²)ₖ (1)

(wherein R¹ represents a saturated or unsaturated, aliphatic or alicyclic polycarboxylic acid residue having a carbon number of 1 to 25 or an aromatic polycarboxylic acid residue having a carbon number of 1 to 25, and R² represents an alkyl group or cycloalkenyl group having a carbon number of 1 to 18, a phenyl group, a naphthyl group, an anthryl group, or a group represented by any one of the following formulae (2) to (5): 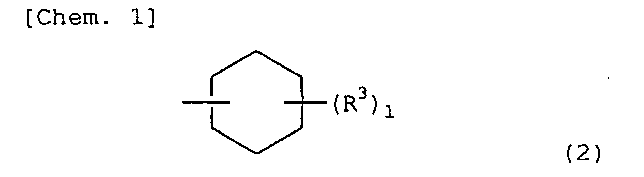 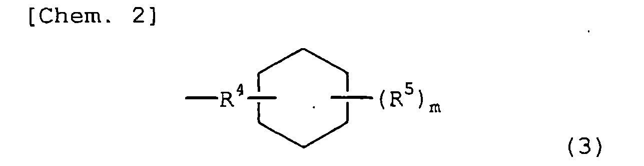 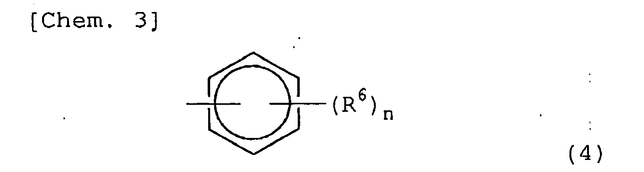 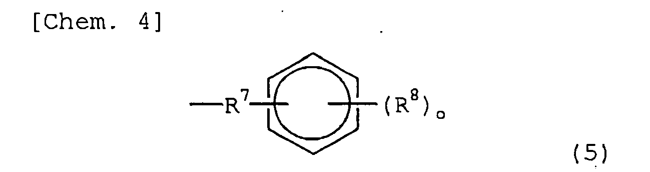 wherein R³, R⁵, R⁶ and R⁸ each independently represents an alkyl group, alkenyl group or alkoxy group having a carbon number of 1 to 18, a cycloalkyl group having a carbon number of 3 to 12, a phenyl group or a halogen atom, R⁴ and R⁷ each independently represents a linear or branched alkylene group having a carbon number of 1 to 4, k represents an integer of 3 to 6, 1 and n each independently represents an integer of 1 to 5, and m and o each independently represents an integer of 0 to 5).

3. The polyester high-strength fiber as described in 1 or 2 above, wherein the intrinsic viscosity of the polyester fiber is from 0.7 to 1.2.

4. The polyester high-strength fiber as described in any one of 1 to 3 above, wherein the content of the amide compound is from 0.01 to 2 mass%. Effects of the Invention

The polycarboxylic acid-based amide compound according to the present invention produces an effect of decreasing the melt viscosity only by adding it in a small amount to a polyester resin at the time of melt-spinning the polyester resin and enables to maintain the production stability in the spinning process. Furthermore, the undrawn yarn obtained has a very high drawing property and can be drawn at a high draw ratio, so that a high-strength polyester fiber having a strength of 8.8 cN/dtex or more can be easily obtained.

### BEST MODE FOR CARRYING OUT THE INVENTION

The present invention is specifically described below.
The polyester resin as used in the present invention indicates a polymer where the bond constituting the main chain is an ester bond, and examples thereof include polyethylene terephthalate, polybutylene terephthalate and polytrimethylene terephthalate. Polyethylene terephthalate is preferred, and other components may be copolymerized therein to an extent not impairing the effects of the present invention. Also, the resin of the present invention may contain additives such as various stabilizers to an extent not impairing the effects of the present invention.

The polycarboxylic acid-based amide compound added to the polyester resin is preferably a polycarboxylic acid-based amide compound represented by the above formula (1). The polycarboxylic acid-based amide compound represented by the above formula (1) can be easily prepared by performing an amide-forming reaction of an aliphatic, alicyclic or aromatic polycarboxylic acid or an anhydride thereof with one species or two or more species of aliphatic, alicyclic or aromatic monoamines according to a conventionally known method.

Recommended examples of the polycarboxylic acid-based amide compound represented by the above formula (1) include BTC tetracyclohexylamide ("BTC" indicates butanetetracarboxylic acid, particularly, 1,2,3,4-butanetetracarboxylic acid), BTC tetra(2-methylcyclohexylamide), TDA tetracyclohexylamide ("TDA" indicates 3,4-dicarboxy-1,2,3,4-tetrahydro-1-naphthalenesuccinic acid), TDA tetra(2-methylanilide), SMSD tetracyclohexylamide ("SMSD" indicates 5-(succinic acid)-3-methyl-3-cyclohexene-1,2-dicarboxylic acid), trimesic acid trianilide and trimesic acid tri(2-methylanilide).

In the present invention, the amount of the polycarboxylic acid-based amide compound added to the polyester resin is determined according to the objective performance of the fiber, but the polycarboxylic acid-based amide compound is preferably added to account for 0.01 to 2 mass%, more preferably from 0.05 to 1 mass%.

In the present invention, the effect of decreasing the viscosity is exerted by the addition of the polycarboxylic acid-based amide compound in such a relatively small amount, and the pressure at a spinning nozzle is less elevated to enable stable production in the spinning process. Furthermore, the undrawn yarn obtained has an excellent drawing property and the total draw ratio can be increased, so that a high-strength polyester fiber can be obtained by the addition in such a small amount.

The polycarboxylic acid-based amide compound produces an excellent effect on the drawing property of the undrawn yarn by the addition in a very small amount, and is considered to have an action of increasing the elongation of the undrawn yarn or an action of suppressing the orientation.

If the proportion of the polycarboxylic acid-based amide compound is less than 0.01 mass%, the effect of decreasing the melt viscosity is low compared with a fiber comprising only a polyester, and the enhancement of the draw ratio and the effect of increasing the strength are also small. On the other hand, if the proportion of the polycarboxylic acid-based amide compound exceeds 2 mass%, the effect of decreasing the melt viscosity may be elevated, but the worthwhile effect of the blending amount cannot be attained. Also, the undissolved polycarboxylic acid-based amide compound gives rise to a defect in the yarn or significant contamination in the extruder, and as a result, the strength decreases thereby causing a quality problem or easy yarn breaking, and process stability cannot be ensured. In addition, use in a large amount is disadvantageous in view of profitability, and is therefore not preferred.

In the high-strength polyester fiber of the present invention, in order to obtain high strength, the intrinsic viscosity (IV) of the polyester fiber is preferably from 0.7 to 1.2, more preferably from 0.75 to 1.0. In order to obtain the IV in the range above, the IV of the raw material polyester resin is preferably from 0.8 to 1.5. For obtaining a polyester fiber having IV of more than 1.2, a high-IV polyester resin with the IV being higher than that must be used. The high-IV polyester resin is highly viscous and allows for neither uniform dispersion of an additive nor satisfactory drawing due to extremely poor processability, as a result, the objective high-strength fiber cannot be obtained. Accordingly, when IV is in the range above, the effects of the present invention can be effectively brought out and a polyester fiber having a very high strength of 8.8 cN/dtex or more can be obtained.

As for the high-strength polyester fiber of the present invention, although not particularly limited, a monofilament, multifilament or the like is mainly used. In the case of use for industrial materials, particularly, as a reinforcement of rubber such as tire cord, the single yarn fineness is preferably from 1 to 10 dtex, and the total fineness is preferably from 250 to 5,000 dtex.

In the present invention, the extruder for melt-kneading and melt-extruding the polyester resin and the polycarboxylic acid-based amide compound may be a single-screw extruder, a twin-screw extruder, a multi-screw extruder or a multi-stage extruder comprising a combination thereof as long as the desired functions are fulfilled and the necessary requirements are satisfied. In particular, an extruder where a kneading zone is provided is preferably used because the polycarboxylic acid-based amide compound can be finely and uniformly dispersed and compatibilized in the polyester resin. Also, the effect can be more successfully brought out when the rotation number of the screw is increased.

Examples of the method for quantitatively blending the polycarboxylic acid-based amide compound in the polyester resin include a dry chip-blending method, a method of side-feeding the polycarboxylic acid-based amide compound, and a method of side-feeding the polycarboxylic acid-based amide compound-containing polyester resin melt-kneaded in a separate extruder, but the method is not particularly limited.

The spinning is performed by uniformly mixing the polycarboxylic acid-based amide compound with the polyester resin, spinning out the mixture in the melted state, and subjecting the yarn to cooling, drawing and heat treatment. The spun-out yarn may be taken up as an undrawn yarn after cooling and then drawn and heat-treated on a heating roller. The drawing and heat treatment may be performed in the same manner as those for normal polyesters.

### EXAMPLES

The present invention is described in greater detail below by referring to Examples, but the present invention is not limited to only these Examples.

The characteristic values in the Examples were determined by the following measuring methods.
A. Intrinsic Viscosity (IV)
   A GPC measurement was performed using Shodex GP-101 produced by Showa Denko K.K. under the conditions of eluent: hexafluoroisopropanol (HFIP), column: HFIP-806M x 2, detector: UV and flow velocity: 1.0 ml/min, and the obtained value was converted using a polyethylene terephthalate having a known molecular weight (of which IV was measured at 30°C after dissolving it in a mixed solvent of parachlorophenol/tetrachloroethane (3/1 by volume)).

B. Strength
   The strength was measured at an initial sample length of 100 mm and a pulling speed of 100 mm/min according to JIS L 1013 (1999) by using an Autograph manufactured by Shimadzu Corporation.

### (Examples 1 to 3 and Comparative Example 1)

Polyethylene terephthalate having IV of 1.0 was used as the polyester resin raw material, and trimesic acid trianilide produced by New Japan Chemical Co., Ltd., as the polycarboxylic acid-based amide compound, was added thereto in the amount shown in Table 1 and thoroughly mixed. The mixture was vacuum-dried at 150°C for 8 hours and then fed into a hopper. The twin-screw extruder used for dissolving and kneading the polymer was the same-direction rotating and engaging type of 15 mmφ and L/D=30 equipped with one kneading disc sheet. The rotation number of the gear pump was adjusted to give an ejection amount of 2.5 g/min, and the polymer was ejected through a spinning nozzle with one hole in a diameter of 0.6 mm. The spinning temperature was set to 310°C, and the yarn was once taken up at 500 m/min and then sequentially subjected to drawing and heat treatment on heating rollers at a roll temperature of 93°C, 158°C and 214°C. The amount of the polycarboxylic acid-based amide compound added, the intrinsic viscosity (IV value) of each of the polyester resin and fiber, the difference in the ejection pressure at the spinning (ΔP = pressure when the polycarboxylic acid-based amide compound was not added - pressure when the polycarboxylic acid-based amide compound was added), the total draw ratio, and the rupture strength of the drawn yarn are shown in Table 1.

### [Table 1]

**Table 1**

| | Amide Compound | Intrinsic Viscosity (IV) | | Difference in Nozzle Pressure | Drawing Condition | Physical Property of Yarn |
|---|---|---|---|---|---|---|
| | Amount Added (mass%) | Resin | Fiber | ΔP (MPa) | Total Draw Ratio | Strength (cN/dtex) |
| Comparative Example 1 | 0 | 1.0 | 0.81 | 0 | 4.80 | 8.7 |
| Example 1 | 0.05 | 1.0 | 0.80 | 0.2 | 5.23 | 9.8 |
| Example 2 | 0.2 | 1.0 | 0.78 | 0.5 | 6.32 | 11.2 |
| Example 3 | 2.0 | 1.0 | 0.77 | 1.5 | 5.63 | 9.3 |
| Example 4 | 0.2 | 1.0 | 0.78 | 2.0 | 6.17 | 10.8 |
| Comparative Example 2 | 3.0 | 1.0 | 0.79 | 2.2 | 5.38 | 8.5 |
| Comparative Example 3 | 0.2 | 1.7 | 1.28 | 0.2 | 2.55 | 8.3 |

It was confirmed that in Examples 1 to 3 where from 0.05 to 2.0 mass% of polycarboxylic acid-based amide compound was added as an additive, the melt viscosity was decreased, the draw ratio could be high as compared with Comparative Example 1 where the additive was not added, and the rupture strength of the drawn yarn was as high as 9.3 to 11.2 cN/dtex.

### (Example 4)

Spinning and drawing were performed under the same conditions as in Example 2 except that BTC tetracyclohexylamide produced by New Japan Chemical Co., Ltd. was used as the polycarboxylic acid-based amide compound. The results obtained are shown together in Table 1. Similar to Example 2, it was confirmed that the melt viscosity was decreased, the draw ratio could be high and the rupture strength of the drawn yarn was high.

### (Comparative Example 2)

Spinning and drawing were performed under the same conditions as in Example 1 except that a viscosity-decreasing agent, Rikaflow BI-200 (1,2,3,4-butanetetracarboxylic acid bis-p-dodecylphenylimide), produced by New Japan Chemical Co., Ltd. was used as the polycarboxylic acid-based amide compound and added in an amount of 3 mass%. The results obtained are shown together in Table 1. The melt viscosity was decreased and the drawing property of the undrawn yarn was enhanced, but the strength of the drawn yarn was decreased.

### (Comparative Example 3)

Spinning and drawing were performed under the same conditions as in Example 2 except that polyethylene terephthalate having IV of 1.7 was used as the polyester raw material. The results obtained are shown together in Table 1. The draw ratio of the undrawn yarn and the strength of the drawn yarn were decreased.

### INDUSTRIAL APPLICABILITY

The polyester high-strength fiber of the present invention has a very high strength of 8.8 cN/dtex or more and therefore, is useful for industrial materials, particularly for a tire cord.

## Claims

1. A polyester high-strength fiber comprising a polyester resin and a polycarboxylic acid-based amide compound, wherein the polyester fiber has a strength of 8.8 cN/dtex or more.

2. The polyester high-strength fiber according to claim 1, wherein said amide compound is a polycarboxylic acid-based amide compound represented by the following formula (1) :
R¹-(CONH-R²)ₖ (1)
(wherein R¹ represents a saturated or unsaturated, aliphatic or alicyclic polycarboxylic acid residue having a carbon number of 1 to 25 or an aromatic polycarboxylic acid residue having a carbon number of 1 to 25, and R² represents an alkyl group or cycloalkenyl group having a carbon number of 1 to 18, a phenyl group, a naphthyl group, an anthryl group, or a group represented by any one of the following formulae (2) to (5): 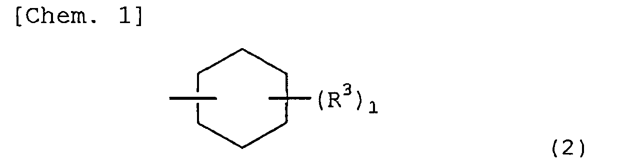 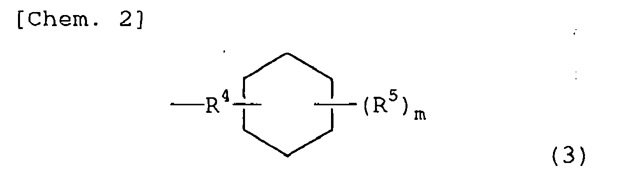 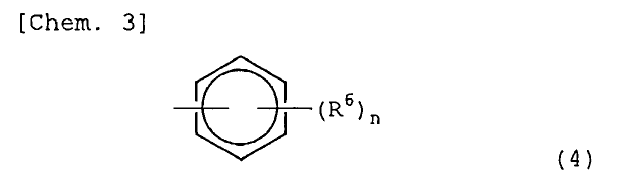 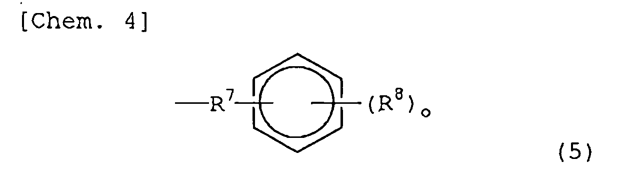 wherein R³, R⁵, R⁶ and R⁸ each independently represents an alkyl group, alkenyl group or alkoxy group having a carbon number of 1 to 18, a cycloalkyl group having a carbon number of 3 to 12, a phenyl group or a halogen atom, R⁴ and R⁷ each independently represents a linear or branched alkylene group having a carbon number of 1 to 4, k represents an integer of 3 to 6, 1 and n each independently represents an integer of 1 to 5, and m and o each independently represents an integer of 0 to 5).

3. The polyester high-strength fiber according to claim 1 or 2, wherein the intrinsic viscosity of the polyester fiber is from 0.7 to 1.2.

4. The polyester high-strength fiber according to any one of claims 1 to 3, wherein the content of said amide compound is from 0.01 to 2 mass%.
